# EUROPEAN PATENT SPECIFICATION

(11) **EP 1 104 364 B1**
(45) Date of publication and mention of the grant of the patent: **01.10.2003**
(21) Application number: 99939132.9
(22) Date of filing: 11.08.1999
(51) Int. Cl.: B60R 13/01

(54) **PEOPLE MOVER CARSHELLS**
PERSONENTRANSPORTFAHRZEUGKAROSSERIEN
CAISSES DE VEHICULES DE TRANSPORT DE PERSONNES

(30) Priority: 11.08.1998 US 96075 P
(43) Date of publication of application: 06.06.2001
(73) Proprietor: DaimlerChrysler Rail Systems GmbH, 13627 Berlin (DE)
(72) Inventor: BELACK, Kevin, P., Pittsburgh, PA 15317-3037 (US)
(74) Representative: Cohausz & Florack
(86) International application number: US9918163
(87) International publication number: WO00009362

(56) References cited:
- EP-A- 0 208 227
- EP-A- 0 670 257
- NL-C- 1 001 262
- US-A- 4 663 920
- US-A- 4 712 623
- US-A- 4 949 536
- US-A- 5 622 774
- US-A- 5 690 378

## Description

### BACKGROUND OF THE INVENTION

### 1. Field of the Invention

The present invention relates to a modular vehicle carbody according to the preamble of claim 1, a fireproof structural panel accordance to the preamble of claim 11, and a method for manufacturing a structural panel to the preamble of claim 14.

### 2. Description of the Prior Art

In general, prior art vehicle bodyshells are formed by mechanically fastening or welding body panels to a vehicle frame to construct the bodyshell. In particular, it is known that prior art mechanical fastening and welding techniques are labor intensive and therefore expensive. Certified welders and skilled laborers are required to weld or mechanically fasten the body panels to the vehicle frame. Additionally, large fixtures are ordinarily required to keep the shape of the bodyshell during assembly. Furthermore, it is known that over time mechanical fasteners loosen which results in increased noise as the loosened body panels rattle against each other. Welded connections are also known to weaken and become brittle over time. Therefore, a need exists to provide a method for securing a plurality of body panels to a vehicle frame which eliminates extensive welding and mechanical fastening required by prior art construction methods.

NL-C-1001262 discloses such a modular vehicle carbody, whist documents US 5,622,774 and US 5,052,906 disclose such a fireproof structural panel and such a method of manufacture respectively.

To improve the fire resistance properties of structural panels EP 0 208 227 Al proposes to have multilayered panels having a porous winner core of inorganic material and external coating layers. Said inner core is at least partly impregnated within an intumescent material to provide good fire resistance properties. Nevertheless, it is rather complicated to provide an even distribution of the intumescent material within the porous core, in order to achieve reliable and even fire resistance.

In the context of improving fire resistance properties of structural panels, US 5,622,774 proposes to have a structural substrate covered with layers of intumescent material, wherein reinforcement material, such as a graphite weave, is enclosed between said layers of intumescent material. To achieve this, a first layer of intumescent material has to be applied to the substrate and precured. Then the reinforcing material is applied to the precured first layer before the second layer of intumescent material is applied. This leads to a relatively time-consuming manufacturing process.

It is thus an object of the present invention to avoid the above disadvantages in the context of fireproof, multilayered structural panels and, especially, to provide for better fire resistance properties that may be obtained easily.

### Summary of the invention

The above object is achieved with a modular vehicle carbody according to claim 1. It is also achieved with a fireproof structural panel according to claim 11. Finally, it is achieved with a method for manufacturing structural panel according to claim 14.

The panels are made of a polymeric material. Each body panel includes at least one finished side with an insulating center section. The body panels are adhered to a vehicle body frame with an adhesive thereby forming a vehicle bodyshell. Fasteners may be used to prevent the body panels from peeling off the vehicle body frame. The present invention may in particular be used to form people mover vehicles. The present invention is also directed to a vehicle bodyshell which is lighter and has improved noise characteristics. The present invention is also a method for manufacturing a vehicle bodyshell utilizing the above panels.

The present invention is also a method for manufacturing a fireproof panel that includes an intumescent fabric layer and a gel layer which are placed in a mold with a resin passing therethrough and cured.

### BRIEF DESCRIPTION OF THE DRAWINGS

Fig. 1 is an exploded top perspective view of a portion of a people mover vehicle made in accordance with the present invention;
Fig. 2 is a perspective view of a body panel of the present invention;
Fig. 3 is a partial cross sectional view of a mold for a part for a people mover made in accordance with the present invention;
Fig. 4 is a sectional elevated view of the part shown in Fig. 3 with an unactivated intumescent fabric layer;
Fig. 5 is a second elevational view of the part shown in Fig. 4 where the intumescent layer is activated; and
Fig. 6 is a partial sectional view of two portions of the people mover vehicle having the sections joined together.

### DETAILED DESCRIPTION OF THE PREFERRED EMBODIMENT

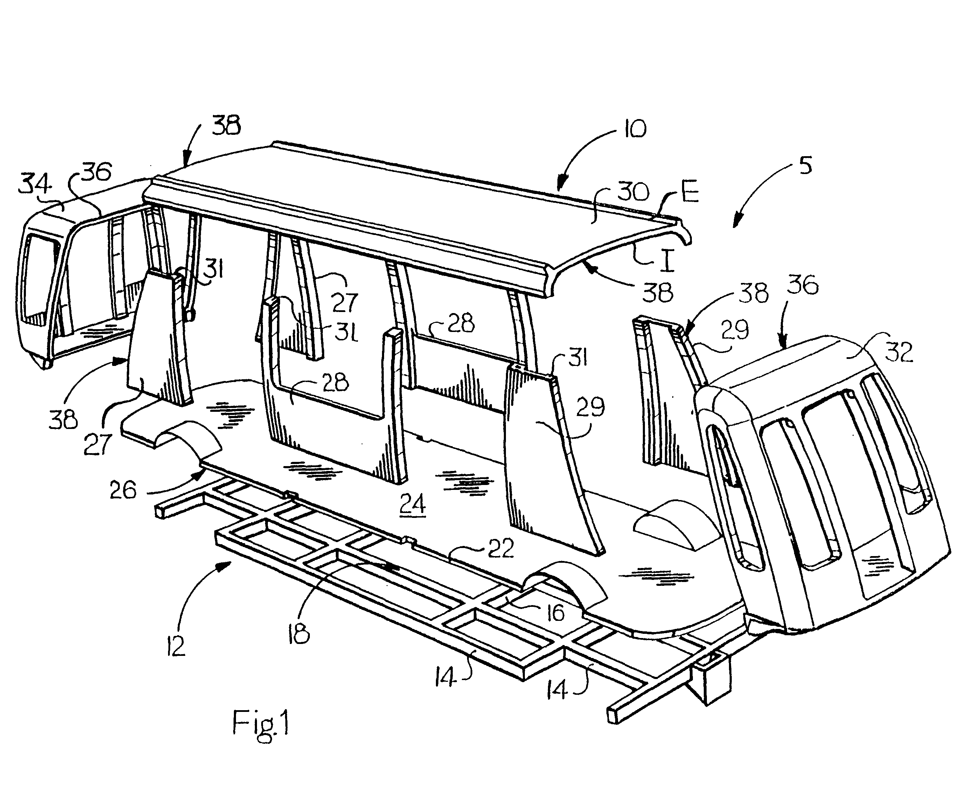

Fig. 1 shows an exploded view of a portion of a people mover vehicle 5 made in accordance with the present invention. The portion of the people mover vehicle 5 generally includes a carshell 10 and a carshell frame 12. The carshell frame 12 may be mounted on wheels, and typically includes a drive unit (not shown).

The carshell frame 12 is a substantially rectangular and rigid framework that includes a plurality of longitudinal members 14 secured to a plurality of cross members 16. The cross members 16 are arranged substantially perpendicular to and are integrally formed with the longitudinal members 14. Alternatively, the cross member 16 may be welded to the longitudinal members 14. The carshell frame 12 further includes a top surface 18 formed by the longitudinal members 14 and the cross members 16 for engaging the carshell 10. Preferably, the carshell frame 12 is made of metal.

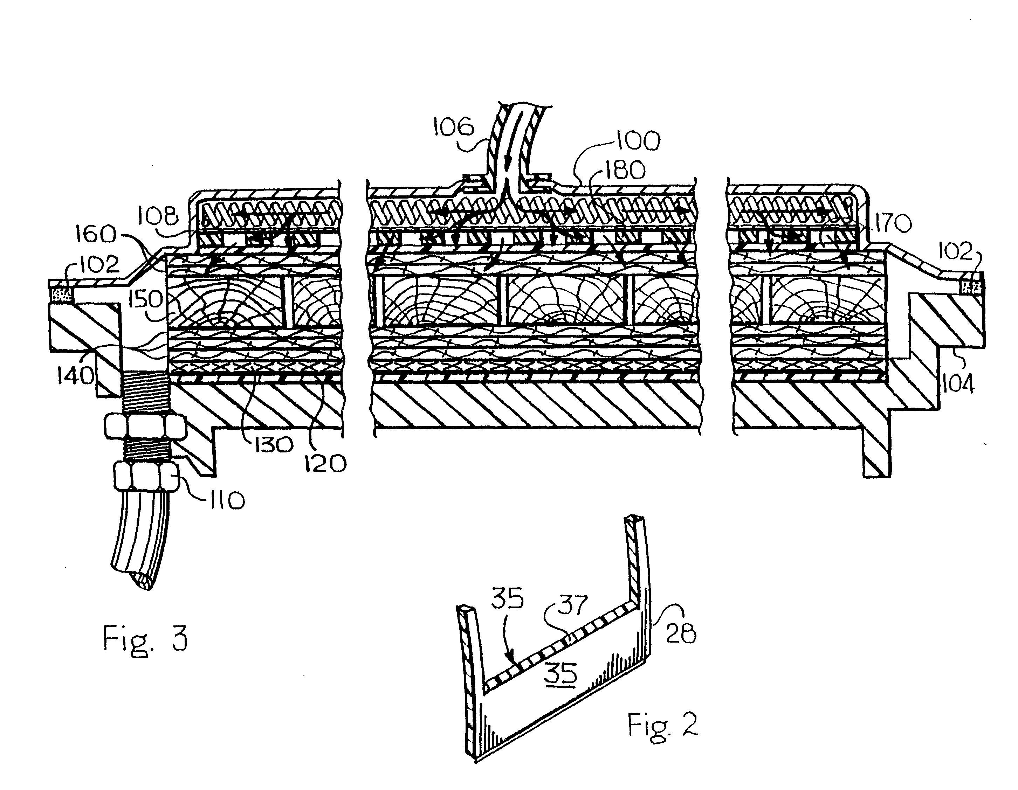

The carshell 10 generally includes a floor panel 22 having a top side 24 and a bottom side 26, a plurality of side panels 27, 28 and 29, a roof panel 30 and two end sections 32 and 34. The side panels 27, 28 and 29 are located on each longitudinal side of the carshell 10. The two end sections 32 and 34 are respectively formed, as a front end and a rear end of the carshell 10. Each of the body panels and sections discussed hereinabove is made of a polymeric material such as fiber reinforced plastic (FRP) and may have a balsa core at least one of the side panels (27,28,29) comprises in its plurality of layers a rigid structural core and a resin impregnated sheet of intumescent fabric. It is formed through the Seemann Composite Resin and Fusion Molding Process, as disclosed in U.S. Patent Nos. 4,902,215 to Seemann, III; 5,052,906 to Seemann; 5,316,462 to Seemann; 5,439,635 to Seemann; 5,505,030 to Michalcewiz et al.; 5,591,291 to Blackmore; 5,601,852 to Seemann; 5,648,137 to Blackmore; 5,656,231 to Blackmore; 5,702,663 to Seemann; and 5,721,034 to Seemann, III et al.. Each of the body panels and sections discussed hereinabove has two finished sides 35 and heat and sound insulating center section 37, as shown in Fig. 2. Fig. 2 shows the centrally located side panel 28 as an example. However, although the exterior surface E and the interior surface I of the panels may be finished, it is also preferable to have only one surface finished, preferably an exterior surface E as opposed to an interior surface I.

The carshell 10 is formed by adhesively securing the side panels 27, 28 and 29 located on each longitudinal side of the carshell 10 to the top side 24 of the floor panel 22 and adhesively securing the roof panel 30 to a top edge 31 of the side panels 27, 28 and 29. The end sections 32 and 34 are each adhesively secured along a first circumferential edge 36 to a second circumferential edge 38 formed by the roof panel 30 and the side panels 27 and 29 at each longitudinal end of the carshell 10. Preferably, the various body panels and end sections are adhesively joined together with 3M® epoxy adhesive 9323BA or a methyl acrylate adhesive such as PLEXUS® MA425.

The carshell 10 is then adhesively bonded to the carshell frame 12 to form the people mover vehicle 5. Preferably, the carshell 10 is adhesively bonded to the carshell frame 12 with the same adhesive disclosed hereinabove. The bottom side 26 of the floor panel 22 is adhesively secured to the top surface 18 of the carshell frame 12, again preferably with the same adhesive disclosed hereinabove. Mechanical fasteners may be provided connecting the carshell 10 to the carshell frame 12 to prevent the floor panel 22 from peeling off the carshell frame 12. Mechanical fasteners may also be provided between the various side panels 27, 28 and 29, roof panel 30 and end sections 32 and 34 at the joints therebetween to prevent the body panels and end sections from separating from one another. However, far fewer mechanical fasteners will be required under the joining process disclosed hereinabove due to the adhesive bonding at the joints of the various body panels and end sections. Additionally, reinforcement sections, such as butt-straps, adhesively bonded over the various joints are no longer required under the joining process disclosed hereinabove.

Therefore, the present invention provides a bodyshell which uses adhesive bonding at the joints between body panels as the mechanism to transfer the bodyshell loading. The adhesive joints will be the main load transfer path of the bodyshell. Reinforcing mechanical fasteners may be used at the joints between body panels to prevent the body panels from separating at the joints. It should be understood that this invention is not limited to people mover vehicles but can also be used in any type of vehicle bodyshells such as cars, passenger trains and aircraft, as examples.

A further advantage of the present invention is that the present invention permits the carshell frame 10 to be modular. Specifically, different designs of end sections 32 and 34 can be provided to change the overall appearance of the carshell frame 12. Similarly, different design side panels 27, 28 and 29 can be provided. One need only adhesive to join the end sections 32 and 33 and side panels 27, 28 and 29 together. This modular arrangement permits the ability to easily change the appearance of a carshell 10.

As previously stated, the preferred method for manufacturing the modular components is through the SCRIMP method. The SCRIMP® method used to form the composite materials includes a mold onto which a gel-coat is applied. The gel-coat includes a resinous material and pigment, such as a vinyl ester resin containing a pigment. Gel-coats are know in the art. One manufacture of gel-coats is Cook Composites and Polymers, P.O. Box 419389, Kansas City, Missouri 64141-6389, USA. A carbon impregnated fireproof or fire resistent cloth, which is an intumescent fabric, is then placed on the gel-coat-film. Intumescent fabrics are known, such as described in U.S. Patent No. 4,996,099. Next, several fiber woven layers are placed on the intumescent fabric. Next, a balsa wood core is placed on the intumescent fabric. Finally, several more layers of fiber fabric are placed on top of the core. An appropriate fluid impervious outer sheet resin distribution system and a peel ply are applied to the system. A vacuum is drawn while resin is supplied to the resin distribution system until resin passes through the fabric layers, the core and the intumescent fabric. Once cured, the part is removed.

Specifically, Fig.3 shows a mold that is utilized in the SCRIMP® process and is similar to that described in U.S. Patent No. 4,902,215. The mold includes a fluid impervious outer sheet 100 which is marginally sealed by tape 102 upon a rigid mold segment 104. A resin inlet 106 is defined on the outer sheet 100. A fluid distribution passageway, defined in a distribution medium 108, is defined under the outer sheet 100. A vacuum outlet 110 is defined in the rigid mold segment 104. A gel-coat layer 120 is placed in the rigid mold segment 104. An intumescent fabric layer or sheet 130 is placed on the gel-coat layer 120. The intumescent fabric layer includes an intumescent fabric such as TECHNOFIRE® 60851 manufactured by Technical Fibre Products LTD, whose address is Ridgebury Park Office, 2927 Route 6, Slate Hill, NY 10973, USA. This intumescent fabric is a non-woven fabric that is porous and permits resin to flow therethrough. Alternatively, the fabric can be woven provided that it is porous and permits resin to flow therethrough. Optionally, one or more layers of fabric or sheet, such as fiberglass 140 or polymeric fiber material or felt, are placed on the fabric layer 130. A balsa wood core or structural core 150 is then placed on the fabric 140. The balsa wood core 150 includes passageways therethrough for the resin to pass. Several more layers of fabric or sheet 160, such as fiberglass or polymeric fiber material or felt, are placed on the core 150. A peel ply 170 is placed between the upper fabric layer 160 and a distribution media or arrangement 180.

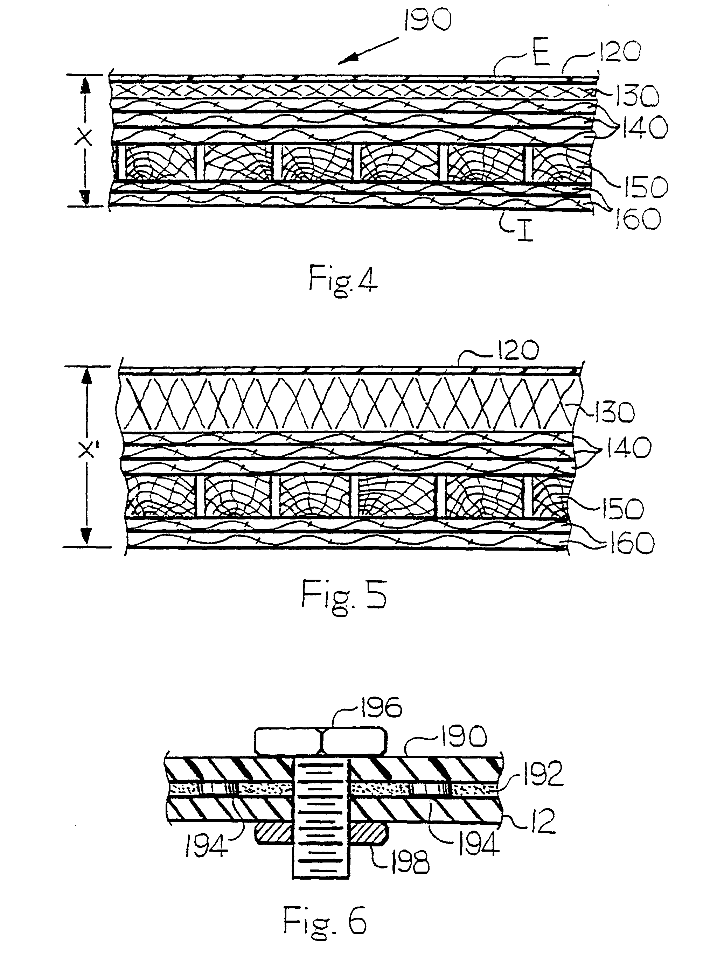

In operation, a vacuum is drawn via the outlet 110 and resin is supplied via the resin inlet 106. Resin, such as a vinyl ester, passes through the distribution media arrangement 100 and the peel ply 170 and through fabric layers 160, core 150, fabric layers 140 and fabric by 130, thereby impregnating layers 160, core 150, layers 140 and fabric 130. The structure is then cured and the part 190 removed as shown in Fig. 4. The part 190 can be any of the car body parts previously described.

The method for manufacturing the part 190, which is a fireproof panel, includes the steps of providing a rigid mold or rigid mold segment 104, placing a gel-coat layer 120 in the rigid mold by; placing an intumescent fabric layer 130 or the gel-coat layer 120; applying a liquid impervious upper layer 100 above the intumescent fabric layer 130; passing resin through the liquid impervious upper layer and through the intumescent fabric layer 130 while drawing a vacuum; and curing the resin impregnated intumescent fabric layer resulting in a fireproof part or panel 190 having a gel-coat layer 120 exterior finished surface E. One or more fiberglass fabric layers 140 and 160 and a core 150 can also be provided on top of the intumescent fabric layer 130 and below the liquid impervious layer 120, prior to providing resin to the system.

The exterior finish E is formed to be extremely glossy due to the gel-coat resin 120 and the intumescent fabric 130. In this arrangement, the exterior surface E does not need to have a separate coat of paint applied after the part 190 is formed. In some cases, the part 190 may not need a core 150 or all of the layers of fiberglass 140 and 160 as shown. The part 190 as formed has a thickness of X, however after heat is applied to the part 190 and the temperature of the fabric 130 reaches an activation temperature, the fabric 130 will expand and provide thermal and fireproof insulation and the part thickness will be X'. In other words, the part or panel 190 will have a first thickness X when the part 190 is at a first temperature or less and the part or panel will have a second thickness X' at a temperature greater than the first temperature. It has been found that use of the intumescent fabric 130 will result in a thinner fireproof part. The prior art uses rock wool as a fireproof insulator, which results in a very thick part. For example, a prior art rock wool floor panel is 10.2 cm (four inches) thick, while the use of the intumescent fabric results in a 2.5 cm (one-inch) thick part having the same strength and fireproof qualities. This thinner floor panel permits for a roomier interior.

As stated previously, adjacent parts 190 and the frame 12 or other parts 190 can be secured to each other using a methyl-acrylate adhesive 192. However, to eliminate peeling of the parts, mechanical fasteners may be used. Referring to Fig. 6, a part 190, which shows a general cross-section, without showing the specific layers, is secured to the frame 12 through a methyl-acrylate adhesive 192. Spacers 194, such as washers, are provided to space part 190 to frame 12 and adjacent parts 190 (not shown). Threaded fastener 196 passes through the part 190 and the adjacent frame 12 and is received by a nut 198. The spacers 194 provide a space for the adhesive to be received. Only a few fasteners are required to prevent peeling of the part 190 from the frame 12, since the adhesive provides sufficient strength against shear and tensile forces. Hence, mechanical fasteners can be used to attach adjacent parts 190 and/or a part 190 to the frame 12 to prevent peeling of the adhesively secured parts 190.

Another advantage of the present design is that peeling is minimized through the modular design, especially because of the solid floor panel 22 and roof panel 30 as opposed to longitudinally splitting the roof panel 30 and the floor panel 24 as is done in the prior art.

Consequently, although this invention has been described with reference to a preferred embodiment, obvious modifications and alterations of the invention may be made without departing from the scope of the appended claims.

## Claims

1. A modular vehicle carbody comprising; a polymeric roof panel (30); at least one polymeric side panel (27, 28, 29) adhesively secured to said roof panel (30) and a polymeric floor panel (22) adhesively secured to said side panel (27, 28, 29), wherein the at least one side panel (27, 28, 29) is comprised of a plurality-of layers (120, 130, 140, 150, 160), **characterized in that** said plurality of layers includes a rigid structural core (150) and a resin impregnated sheet (130) of intumescent fabric.

2. The modular vehicle carbody as claimed in claim 1, further comprising a carshell frame (12) secured to said floor panel (22).

3. The modular vehicle carbody as claimed in claim 1, further comprising a plurality of polymeric side panels (27, 28, 29) adhesively secured to said roof panel (30) and said floor panel (22).

4. The modular vehicle carbody as claimed in claim 1, further comprising first end section (32), adhesively secured to said roof panel (30) and said floor panel (22) and a second end section (34) adhesively secured to said roof panel (30) and said floor panel (22).

5. The modular vehicle carbody as claimed in claim 1, wherein said intumescent fabric (130) further comprises graphite.

6. The modular vehicle carbody as claimed in claim 5, wherein said plurality of layers further comprises at least one layer (140, 160) made of glass or polymeric fibers.

7. The modular vehicle carbody as claimed in claim 1, wherein the core (150) is comprised of wood.

8. The modular vehicle carbody as claimed in claim 1, further comprising a gel-coat layer (120) adjacent said intumescent fabric (130), whereby said gel-coat layer (120) defines an exterior surface.

9. The modular vehicle carbody as claimed in claim 2, further comprising mechanical fasteners (196, 198) attached to respective adjacent ones of said side panel .(27, 28, 29), said roof panel (30), said floor panel (22), and said carshell frame (12) to prevent peeling of the adhesively secured panels.

10. The modular vehicle carbody as claimed in claim 9, further comprising spacers (194) positioned between respective ones of said adjacent adhesively secured panels (22, 27, 28, 29, 30) and said carshell frame (12), to define a space for adhesive to be received.

11. A fireproof structural panel, comprising a plurality of layers including a rigid structural core (150) a layer comprising an intumescent material (130) and a coating layer (120), adjacent said intumescent material (130) that defines an exterior surface, whereby at a first temperature or less, said panel has a first thickness and at a temperature greater than the first temperature, the panel is at a second thickness, **characterized in that** said layer comprising an intumescent material is a resin impregnated sheet (130) of intumescent fabric and said coating layer is a gel-coat layer (120).

12. The fireproof structural panel as claimed in claim 11, further comprising one or more layers (140, 160) of glass or polymeric fiber material.

13. The fireproof structural panel as claimed in claim 12 wherein the rigid structural core (150) is wood.

14. A method for manufacturing a fireproof structural panel comprising the steps of:
- providing a rigid mold (104);
- placing several layers (120; 130) in said rigid mold (104);
- applying a liquid impervious upper layer (100) above said several layers (120, 130); and
- passing resin through a resin inlet (106) in the liquid impervious upper layer (100) and through at least one of said several layers (120, 130) while drawing a vacuum;
**characterized by**
- said placing several layers (120, 130) in said rigid mold comprises
- placing a gel-coat layer (120) in said rigid mold (104) and
- placing an intumescent fabric layer (130) on the gel-coat layer (120);
- said passing resin through at least one of said layers comprises passing resin through said intumescent fabric layer (130); and
- curing the resin impregnated intumescent fabric layer (130) resulting in a fireproof structural panel having a gel-coat exterior finished surface.

15. The method for manufacturing a fireproof structural panel as claimed in claim 14, further comprising the steps of providing one or more fabric layers (140, 160) adjacent said intumescent fabric (130) prior to passing resin therethrough.

16. The method of manufacturing a fireproof structural panel as claimed in claim 14 wherein the rigid structural core (150) is wood.

## Patentansprüche

1. Modulare Fahrzeugkarosserie, umfassend: eine polymere Dachplatte (30); zumindest eine polymere Seitenplatte (27, 28, 29), die durch Kleben an der Dachplatte (30) befestigt ist, und eine polymere Bodenplatte (22), die durch Kleben an der Seitenplatte (27, 28, 29) befestigt ist, wobei die zumindest eine Seitenplatte (27, 28, 29) eine Anzahl von Schichten (120; 130, 140, 150, 160) umfasst, **dadurch gekennzeichnet, daß** die Anzahl von Schichten einen starren Strukturkern (150) und eine harzimprägnierte Lage (130) aus intumeszentem Gewebe umfasst.

2. Modulare Fahrzeugkarosserie nach Anspruch 1, ferner umfassend einen Fahrzeugrahmen (12), der an der Bodenplatte (22) befestigt ist.

3. Modulare Fahrzeugkarosserie nach Anspruch 1, ferner umfassend mehrere polymere Seitenplatten (27, 28, 29), die durch Kleben an der Dachplatte (30) und der Bodenplatte (22) befestigt sind.

4. Modulare Fahrzeugkarosserie nach Anspruch 1, ferner umfassend einen ersten Endabschnitt (32), der durch Kleben an der Dachplatte (30) und der Bodenplatte (22) befestigt ist, und einen zweiten Endabschnitt (34), der durch Kleben an der Dachplatte (30) und der Bodenplatte (22) befestigt ist.

5. Modulare Fahrzeugkarosserie nach Anspruch 1, wobei das intumeszente Gewebe (130) ferner Graphit umfasst.

6. Modulare Fahrzeugkarosserie nach Anspruch 5, wobei die Anzahl von Schichten ferner zumindest eine Schicht (140, 160) umfasst, die aus Glas- oder Polymerfasern hergestellt ist.

7. Modulare Fahrzeugkarosserie nach Anspruch 1, wobei der Kern (150) aus Holz gebildet ist.

8. Modulare Fahrzeugkarosserie nach Anspruch 1, ferner umfassend eine Geldeckschicht (120), die dem intumeszenten Gewebe (130) benachbart ist, wobei die Geldeckschicht (120) eine Außenfläche definiert.

9. Modulare Fahrzeugkarosserie nach Anspruch 2, ferner umfassend mechanische Befestigungen (196, 198), die an jeweils benachbarten Bereichen der Seitenplatten (27, 28, 29), der Dachplatte (30), der Bodenplatte (22) und dem Fahrzeugrahmen (12) angebracht sind, um ein Lösen der durch Kleben verbundenen Platten zu verhindern.

10. Modulare Fahrzeugkarosserie nach Anspruch 9, ferner umfassend Distanzstücke (194), die zwischen jeweiligen der benachbarten, durch Kleben befestigten Platten (22, 27, 28, 29, 30) und dem Gitterrohrrahmen (12) angeordnet sind, um einen Raum zur Aufnahme eines Klebemittels zu definieren.

11. Feuerfeste Strukturplatte, umfassend eine Anzahl von Schichten, die einen starren Strukturkern (150), eine ein intumeszentes Material (130) umfassende Schicht, und eine benachbart dem intumeszenten Material (130) angeordnete und eine Außenfläche definierende Beschichtungsschicht (120) umfasst, wobei die Platte bei einer ersten Temperatur oder darunter eine erste Dicke aufweist und die Platte bei einer Temperatur, die höher als die erste Temperatur ist, eine zweite Dicke aufweist, **dadurch gekennzeichnet, daß** die ein intumeszentes Material umfassende Schicht eine harzimprägnierte Lage (130) aus intumeszentem Gewebe ist, und die Beschichtungsschicht eine Geldeckschicht (120) ist.

12. Feuerfeste Strukturplatte nach Anspruch 11, ferner umfassend eine oder mehrere Schichten (140, 160) aus Glas- oder Polymerfasermaterial.

13. Feuerfeste Strukturplatte nach Anspruch 12, wobei der starre Strukturkern (150) Holz ist.

14. Verfahren zum Herstellen einer feuerfesten Strukturplatte, folgende Schritte umfassend:
- Vorsehen einer starren Form (104);
- Anordnen verschiedener Schichten (120, 130) in der starren Form (104);
- Aufbringen einer flüssigkeitsundurchlässigen oberen Schicht (100) über den verschiedenen Schichten (120, 130);
- Durchführen von Harz durch einen Harzeinlaß (106) in der flüssigkeitsundurchlässigen oberen Schicht (100) und durch zumindest eine der verschiedenen Schichten (120, 130) während des Herbeiführens eines Vakuumzustands;
**dadurch gekennzeichnet, daß**
- das Anordnen verschiedener Schichten (120, 130) in der starren Form umfasst:
- Anordnen einer Geldeckschicht (120) in der starren Form (104) und
- Anordnen einer intumeszenten Gewebeschicht (130) auf der Geldeckschicht (120);
- das Durchführen von Harz durch zumindest eine der Schichten das Durchführen von Harz durch die intumeszente Gewebeschicht (130) umfasst; und
- ein Härten der harzimprägnierten intumeszenten Gewebeschicht (130) erfolgt, wodurch sich eine feuerfeste Strukturplatte mit einer Geldeckschichtaußenfläche ergibt.

15. Verfahren zum Herstellen einer feuerfesten Strukturplatte nach Anspruch 14, ferner umfassend die Schritte des Vorsehens einer oder mehrerer Gewebeschichten (140, 160) benachbart dem intumeszenten Gewebe (130) vor dem Durchführen von Harz durch dieses.

16. Verfahren zum Herstellen einer feuerfesten Strukturplatte nach Anspruch 14, wobei der starre Strukturkern (150) Holz ist.

## Revendications

1. Caisse de véhicule modulaire, comprenant ; un panneau de toit (30) en polymère ; au moins un panneau latéral (27, 28, 29) en polymère, assemblé par collage audit panneau de toit (30), et un panneau de fond (22) en polymère assemblé par collage audit panneau latéral (27, 28, 29), dans laquelle ledit au moins un panneau latéral (27, 28, 29) comprend une pluralité de couches (120, 130, 140, 150, 160), **caractérisé en ce que** ladite pluralité de couches comprend une âme structurelle rigide (150) et une couche (130) de tissu intumescent imprégnée de résine.

2. Caisse de véhicule modulaire selon la revendication 1, comprenant encore un cadre (12) de coque de voiture assemblé audit panneau de fond (22).

3. Caisse de véhicule modulaire selon la revendication 1, comprenant encore plusieurs panneaux latéraux (27, 28, 29) assemblés par collage audit de toit (30) et audit panneau de fond (22).

4. Caisse de véhicule modulaire selon la revendication 1, comprenant encore une première section d'extrémité (32), assemblée par collage audit panneau de toit (30) et audit panneau de fond (22), et une seconde section d'extrémité (34) assemblée par collage audit panneau de toit (30) et audit panneau de fond (22).

5. Caisse de véhicule modulaire selon la revendication 1, dans laquelle le tissu intumescent (130) comprend, en outre, du graphite.

6. Caisse de véhicule modulaire selon la revendication 5, dans laquelle ladite pluralité de couches comprend, en outre, au moins une couche (140, 160) composée de fibres de verre ou de fibres polymères.

7. Caisse de véhicule modulaire selon la revendication 1, dans laquelle l'âme (150) est faite de bois.

8. Caisse de véhicule modulaire selon la revendication 1, comprenant encore une couche d'enduit gélifié (120) adjacente au tissu intumescent (130), ladite couche d'enduit gélifié (120) définissant une surface extérieure.

9. Caisse de véhicule modulaire selon la revendication 2, comprenant encore des organes de fixation mécaniques (196, 198) fixés aux parties adjacentes desdits panneaux latéraux (27, 28, 29), du panneau de toit (30), du panneau de fond (22) et du cadre (12) de coque de véhicule, afin d'empêcher le décollement des panneaux assemblés par collage.

10. Caisse de véhicule modulaire selon la revendication 9, comprenant en outre des éléments intercalaires (194) placés entre les différents panneaux adjacents (22, 27, 28, 29, 30) assemblés par collage et ledit cadre (12) de coque du véhicule, afin de définir un espace devant recevoir de la colle.

11. Panneau structurel à l'épreuve du feu, comprenant une pluralité de couches qui comprend une âme structurelle rigide (150), une couche constituée d'une matière intumescente (130) et une couche d'enduction (120) adjacente à ladite matière intumescente (130) et définissant une surface extérieure, le panneau présentant une première épaisseur à une première température ou une température inférieure, et une seconde épaisseur à une température supérieure à la première température,
**caractérisé en ce que** ladite couche comprenant une matière intumescente est une plaque (130) de tissu intumescent imprégnée de résine et **en ce que** ladite couche d'enduction est une couche d'enduit gélifié (120).

12. Panneau structurel à l'épreuve du feu selon la revendication 11, comprenant encore une ou plusieurs couches (140, 160) de matière à base de fibres de verre ou de fibres polymères.

13. Panneau structurel à l'épreuve du feu selon la revendication 12, dans lequel l'âme structurelle rigide (150) est du bois.

14. Procédé de fabrication d'un panneau structurel à l'épreuve du feu, comprenant les opérations consistant à
- confectionner un moule rigide (104) ;
- disposer plusieurs couches (120, 130) dans ledit moule rigide (104) ;
- appliquer une couche supérieure (100) imperméable aux liquides au-dessus de ladite pluralité de couches (120, 130) ; et
- introduire de la résine par un trou de coulée de résine (106) dans la couche supérieure (100) imperméable aux liquides et à travers d'au moins l'une desdites plusieurs couches (120, 130), tout en produisant un vide ;
**caractérisé en ce que**
- l'opération consistant à disposer plusieurs couches (120, 130) dans le moule rigide consiste à:
- disposer une couche d'enduit gélifié (120) dans le moule rigide (104) ; et
- disposer une couche de tissu intumescent (130) sur la couche d'enduit gélifié (120) ;
- l'opération d'introduction de la résine à travers d'au moins l'une desdites couches consiste à faire passer la résine à travers de ladite couche de tissu intumescent (130) ; et
- faire polymériser la couche de tissu intumescent (130) imprégnée de résine, ce qui donne un panneau structurel à l'épreuve du feu possédant une surface extérieure finie d'enduit gélifié.

15. Procédé de fabrication d'un panneau structurel à l'épreuve du feu selon la revendication 14, comprenant encore les opérations consistant à disposer une ou plusieurs couches de tissu (140, 160) au voisinage du tissu intumescent (130) avant de faire passer de la résine à travers de celui-ci.

16. Procédé de fabrication d'un panneau structurel à l'épreuve du feu selon la revendication 14, dans lequel l'âme structurelle rigide (150) est du bois.
